# NEUE EUROPÄISCHE PATENTSCHRIFT

(11) **EP 1 322 511 B2**
(45) Veröffentlichungstag und Bekanntmachung des Hinweises auf die Entscheidung über den Einspruch: **24.11.2021**
(45) Hinweis auf die Patenterteilung: 24.11.2010
(21) Anmeldenummer: 01974254.3
(22) Anmeldetag: 14.09.2001
(51) Int. Cl.: B60T 17/00

(54) **DRUCKLUFTAUFBEREITUNGSEINRICHTUNG FÜR KRAFTFAHRZEUGE UND VERFAHREN ZUR REGENERATION DES TROCKNUNGSMITTELS EINES LUFTTROCKNERS EINER LUFTDRUCKVERSORGUNGSANLAGE EINES KRAFTFAHRZEUGS**
COMPRESSED AIR PREPARATION DEVICE FOR MOTOR VEHICLES AND METHOD FOR REGENERATING THE DRYING AGENT OF AN AIR DRYER OF A COMPRESSED AIR SUPPLY SYSTEM OF A MOTOR VEHICLE
DISPOSITIF DE TRAITEMENT D'AIR COMPRIME POUR AUTOMOBILES ET PROCEDE DE REGENERATION DE L'AGENT SICCATIF DU DESSICCATEUR D'AIR D'UNE INSTALLATION D'ALIMENTATION EN AIR COMPRIME D'AUTOMOBILE

(30) Priorität: 21.09.2000 DE 10047470
(43) Veröffentlichungstag der Anmeldung: 02.07.2003
(73) Patentinhaber: KNORR-BREMSE Systeme für Nutzfahrzeuge GmbH, 80809 München (DE)
(72) Erfinder: HILBERER, Eduard, 68766 Hockenheim (DE)
(74) Vertreter: Schumacher & Willsau
(86) Internationale Anmeldenummer: PCT/EP2001/010629
(87) Internationale Veröffentlichungsnummer: WO 2002/024505

(56) Entgegenhaltungen:
- DE-A- 4 219 101
- US-A- 5 209 764

## Beschreibung

Die Erfindung betrifft eine Druckluftaufbereitungseinrichtung für Kraftfahrzeuge mit einer elektronischen Steuervorrichtung und einer Regenerationseinrichtung, wobei mittels der elektronischen Steuervorrichtung die Regenerationseinrichtung gesteuert wird. Beschrieben wird ferner ein nicht beanspruchtes Verfahren zur Regeneration des Trocknungsmittels eines Lufttrockners einer Druckluftversorgungsanlage eines Kraftfahrzeugs mit einer elektronischen Steuervorrichtung und einer Regenerationseinrichtung.

Aus der DE 44 21 575 A1 ist eine derartige Druckluftaufbereitungseinrichtung für Fahrzeug-Druckluftanlagen bekannt. Die DE 44 21 575 A1 geht von dem Gedanken aus, sowohl den Druckregler als auch das Mehrkreisschutzventil elektro-pneumatisch auszubilden und innerhalb eines gemeinsamen Gehäuses Elemente vorzusehen, die sowohl die Funktion des Druckreglers wie auch die des Mehrkreisschutzventils sowie ggf. eines zusätzlich angeordneten Trockners erfüllen.

Aus der DE 44 21 575 A1 ist keine Möglichkeit entnehmbar, eine gesteuerte Regeneration nach dem Abstellen des Fahrzeuges durchführen zu können.

Aus der DE 42 19 101 A1 ist eine Druckluftversorgungseinrichtung bekannt, durch die gewährleistet ist, dass unabhängig von der Nutzungsphase des Fahrzeuges bei der Wiederinbetriebnahme die Lufttrocknungseinrichtung mit voller Trockenleistung bereitsteht. Hierbei wird der Regenerationsbetrieb der Druckluftversorgungseinrichtung beim Abstellen des Fahrzeuges eingeleitet, wobei ein Zeitglied beim Abstellen des Fahrzeuges eingeschaltet wird. Das Zeitglied wird sofort synchronisiert und durch Öffnen des Fahrtschalters des Fahrzeuges geschaltet. Nach Beendigung des Regenerationsbetriebes schaltet das auf eine bestimmte Zeitdauer eingestellte Zeitglied die Regeneration ab. Jedoch bleibt nach Beendigung und Abschalten des Regenerationsbetriebes das Zeitglied weiterhin bestromt.

Demgegenüber liegt der Erfindung die Aufgabe zugrunde, eine Druckluftaufbereitungseinrichtung anzugeben, mittels der es möglich ist, bei Start eines Fahrzeugs einen regenerierten Trockner zur Verfügung zu stellen, wobei es vorzugsweise aufgrund durchzuführender Regenerationsvorgänge nicht zu einem vollständigen Entleeren bzw. einem im wesentlichen Entleeren von Energiequellen des Kraftfahrzeugs, wie insbesondere Batterien oder Akkumulatoren, kommen soll.

Gelöst wird diese Aufgabe durch eine Druckluftaufbereitungseinrichtung für Kraftfahrzeuge mit einer elektronischen Steuervorrichtung und einer Regenerationseinrichtung, wobei mittels der elektronischen Steuervorrichtung die Regenerationseinrichtung gesteuert wird, die dadurch weitergebildet ist, dass nach Abstellen des Kraftfahrzeugs mittels der Steuervorrichtung die Regenerationseinrichtung derart steuerbar ist, dass wenigstens ein Regenerationszyklus durchführbar ist, wobei die Stromversorgung der Steuervorrichtung mittels einer beim Ausschalten des Kraftfahrzeugs nicht abschaltbaren Versorgungsleitung geschieht, wobei eine Schaltvorrichtung vorgesehen ist, mittels der die elektronische Steuervorrichtung von der Stromversorgung trennbar ist.

Durch diese erfindungsgemäße Weiterbildung der Druckluftaufbereitungseinrichtung ist eine gesteuerte Regeneration nach dem Abstellen des Fahrzeugs durchführbar. Im Rahmen dieser Erfindung bedeutet Ausstellen des Kraftfahrzeuges insbesondere auch Abstellen des Kraftfahrzeuges.

Dadurch, dass die Stromversorgung der Steuervorrichtung mittels einer beim Ausschalten des Kraftfahrzeugs nicht abschaltbaren Versorgungsleitung geschieht, ist es möglich, auch nach Abschalten des Kraftfahrzeuges die für den Regenerationsvorgang zuständige Steuervorrichtung noch mit Strom bzw. Energie zu versorgen.

Da mittels der Schaltvorrichtung die elektronische Steuervorrichtung von der Stromversorgung trennbar ist, wird ein Entleeren einer Energiequelle des Kraftfahrzeugs wie insbesondere einer Batterie oder eines Akkumulators verhindert bzw. der Energieverbrauch minimiert. Im Rahmen dieser Erfindung bedeutet die Trennbarkeit von der Stromversorgung insbesondere, dass die Steuervorrichtung ausschaltbar ist bzw. ausgeschaltet wird. Erfindungsgemäß ist die Schaltvorrichtung in der elektronischen Steuervorrichtung integriert.

Erfindungsgemäß ist eine Detektionsvorrichtung vorgesehen, die das Ausstellen des Kraftfahrzeugs detektiert. Dadurch ist es möglich, gleich nach Ausschalten des Kraftfahrzeugs den Regenerationsvorgang zu beginnen.

Ferner vorzugsweise ist die Schaltvorrichtung eine Zeituhr, mittels der das Trennen von der Spannungsversorgung nach einer vorgebbaren Zeit ermöglicht ist. Erfindungsgemäß ist ein Drucksensor vorgesehen, mittels dem eine druckabhängige Steuerung des wenigstens einen Regenerationszyklus ermöglicht ist. Auf diese Weise kann je nach Kraftfahrzeug bzw. Druckstatus der Fahrzeugdruckluftanlage eine optimierte Regeneration durchgeführt werden. Vorzugsweise findet die Detektion des Ausschaltens des Kraftfahrzeuges an einer schaltbaren Versorgungsleitung statt oder über eine Datenleitung.

Bei der erfindungsgemäßen Druckluftaufbereitungseinrichtung für Kraftfahrzeuge mit einer elektronischen Steuervorrichtung, einer Regenerationseinrichtung und einer Energiequelle ist die elektronische Steuervorrichtung mit der Energiequelle über eine permanente Versorgungsleitung verbindbar. Durch diese Maßnahme ist es auch nach Ausschalten des Kraftfahrzeuges möglich, mittels der elektronischen Steuervorrichtung die Regenerationseinrichtung anzusteuern. Im Rahmen dieser Erfindung bedeutet permanente Versorgungsleitung insbesondere eine nicht durch Ausschalten des Kraftfahrzeugs abschaltbare Versorgungsleitung.

Bei der erfindungsgemäß vorgesehenen Detektionsvorrichtung , die das Abstellen des Kraftfahrzeuges detektiert, findet die Detektion hierbei entweder direkt an einer schaltbaren Versorgungsleitung statt oder aber an einer Datenleitung. Die Verbindbarkeit der Steuervorrichtung geschieht nach Detektion des Ausschaltens oder Abstellens des Kraftfahrzeugs dadurch, dass die Steuervorrichtung entweder an einer permanenten Energieversorgungsleitung angeschlossen ist oder die Energieversorgungsleitung auf die permanente Versorgungsleitung geschaltet wird.

Erfindungsgemäß umfasst die Steuervorrichtung eine Schaltvorrichtung, mittels der die Steuervorrichtung von der Versorgungsleitung trennbar ist. Im Rahmen dieser Erfindung bedeutet die Trennbarkeit der Steuervorrichtung von der Versorgungsleitung insbesondere, dass die Steuervorrichtung ausschaltbar ist. Durch diese Ausgestaltung der Erfindung ist es möglich, nach Abschluss des Regenerationszyklus bzw. der Regeneration einen weiteren Energieverbrauch zu verhindern, so dass die Energiequelle des Fahrzeugs nach Abstellen des Fahrzeugs nicht vollständig entleert wird.

Vorzugsweise ist eine Druckluftversorgungsanlage mit einer der vorgenannten Druckluftaufbereitungseinrichtungen versehen. Ferner vorzugsweise ist ein Kraftfahrzeug mit einer entsprechenden Druckluftversorgungsanlage versehen.

Beschrieben wird ferner ein nicht beanspruchtes Verfahren zur Regeneration des Trocknungsmittels eines Lufttrockners einer Druckluftversorgungsanlage eines Kraftfahrzeugs mit einer elektronischen Steuervorrichtung und einer Regenerationseinrichtung, wobei die Stromversorgung der Steuervorrichtung mittels einer beim Ausschalten des Kraftfahrzeugs nicht abschaltbaren Versorgungsleitung geschieht, mit den folgenden Verfahrensschritten:
- Detektieren des Abstellens des Fahrzeugs durch die elektronische Steuervorrichtung,
- Strömen trockener Luft durch den Lufttrockner und
- Trennen der elektronischen Steuervorrichtung von ihrer Stromversorgung mittels einer Schaltvorrichtung.

Durch dieses Verfahren ist es auch nach Abstellen des Fahrzeugs möglich, das Trocknungsmittel eines Lufttrockners einer Druckluftversorgungsanlage eines Kraftfahrzeugs zu regenerieren. Wenn vorzugsweise zum Strömen trockener Luft durch den Lufttrockner ein Luftstrom durch einen Bypass erzeugt wird, der parallel zu einem Rückstromsperrventil einer Kreisschutzeinrichtung angeordnet ist, ist es möglich, die in der Kreisschutzeinrichtung bzw. in entsprechenden Vorratsbehältern enthaltene trockene Druckluft zur Regeneration des Trocknungsmittels des Lufttrockners zu verwenden.

Vorzugsweise ist das Rückstromsperrventil ein Rückschlagventil. Ferner vorzugsweise wird die durch den Lufttrockner geströmte Luft außerdem insbesondere in die Umgebungsluft ausgelassen.

Ferner vorzugsweise wird der Luftstrom durch den Bypass durch Einschalten eines Regenerationsmagnetventils durch eine elektronische Steuervorrichtung hervorgerufen. Durch diese vorzugsweise Ausgestaltung des Verfahrens ist eine besonders einfache Verfahrensführung möglich. Wenn vorzugsweise die Regeneration für eine vorgegebene Zeitdauer geschieht, ist es möglich, Vorkehrungen zu treffen, so daß die Energiequelle des Kraftfahrzeugs nicht entleert wird. Wenn vorzugsweise die Regeneration druckabhängig geschieht, kann eine optimierte Verfahrensführung durchgeführt werden. Wenn hierzu der Druck in einer Kreisschutzversorgungsleitung und/oder in einer Kreisschutzausgangsleitung gemessen wird, kann der zeitliche Endpunkt der Regeneration sehr einfach bestimmt werden.

Vorzugsweise ist in die elektronische Steuervorrichtung der Luftaufbereitungsanlage eine Detektionseinrichtung und eine Schalteinrichtung integriert. Die Detektionseinrichtung ermöglicht es, den Abschaltvorgang der abschaltbaren Versorgungsleitung zu detektieren und zwar direkt an einer schaltbaren Versorgungsleitung oder über eine Datenleitung. Es ist dann für eine Nachlaufzeit möglich, die Energie zum Bestromen eines Regenerationsmagnetventils aus einer zweiten nicht abgeschalteten elektrischen Versorgungsleitung zu beziehen. Auf diese Art und Weise kann ein Nachlaufregenerationsvorgang durchgeführt werden. Durch eine zusätzlich integrierte Schalteinrichtung kann sich die Steuervorrichtung danach selbst von der nicht abgeschalteten elektrischen Versorgungsleitung trennen und damit den weiteren Stromverbrauch verhindern.

Die Erfindung wird nachstehend ohne Beschränkung des allgemeinen Erfindungsgedankens anhand von Ausführungsbeispielen unter Bezugnahme auf die Zeichnungen exemplarisch beschrieben, auf die im übrigen bezüglich aller im Text nicht näher erläuterten erfindungsgemäßen Einzelheiten ausdrücklich verwiesen wird. Es zeigen:
- Fig. 1: schematisch eine erfindungsgemäße Druckluftversorgungsanlage,
- Fig. 2: den Ablauf einer zeitabhängigen Nachlaufregeneration, und
- Fig. 3: den Ablauf einer druckabhängigen Nachlaufregeneration.

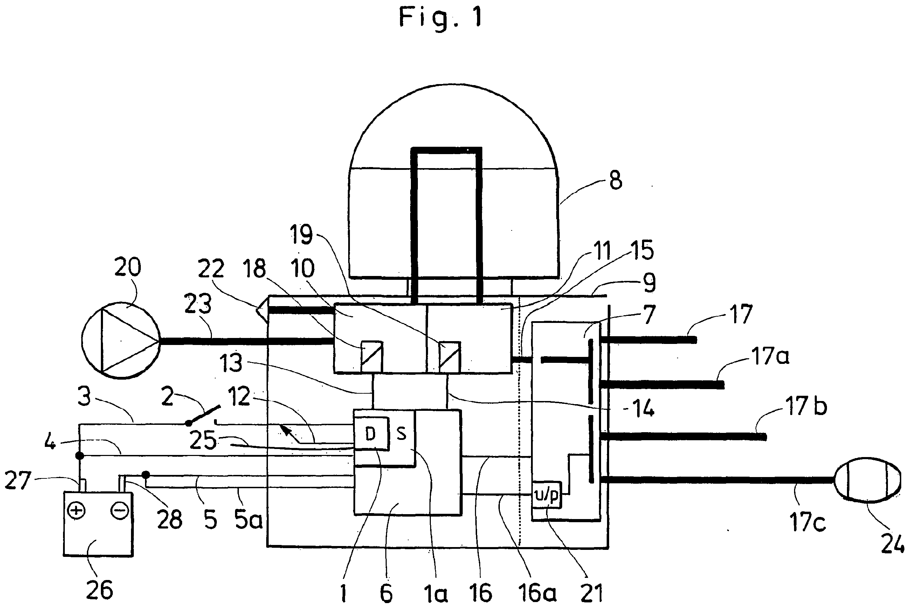

Die in Fig. 1 schematisch dargestellte Druckluftversorgungsanlage ist vorzugsweise zur Verwendung in Fahrzeugdruckluftanlagen einsetzbar. Ein Luftkompressor 20 ist mit einer Förderleitung 23 mit der Druckluftaufbereitungsanlage verbunden. Die Druckluftaufbereitungsanlage umfaßt in einem gemeinsamen oder mehrteiligen Gehäuse 9 einen integrierten Druckregler 10 mit einem Druckreglermagnetventil 18, eine Regenerationseinrichtung 11 mit einem Regenerationsmagnetventil 19, ein Steuergerät 6, eine Kreisschutzeinrichtung 7 und eine Lufttrocknerkartusche 8. Die Zentralversorgungsleitung 15 versorgt die Kreisschutzeinrichtung 7, die Luft auf mehrere Kreise, die nicht dargestellt sind, verteilt. Die Luft steht in den Leitungen 17, 17a, 17b und 17c mit ggf. unterschiedlichem Druck für die Verbraucherkreise zur Verfügung. Die Druckluft kann dann in Vorratsbehältern 24, die an die Leitungen 17 bis 17c angeschlossen sein können, gespeichert werden. In Fig. 1 ist ausschließlich ein Vorratsbehälter 24 dargestellt, der an die Leitung 17c angeschlossen ist.

Der Druck in der Zentralversorgungsleitung 15 wird vom Drucksensor 21 gemessen. Es ist möglich, die kreiszugeordneten Drücke mit Drucksensoren zu messen, die nicht dargestellt sind. Das Gehäuse 9 hat einen Zentralstecker und eine Entlüftung 22. Über den Zentralstecker wird das Steuergerät 6 mit Energie versorgt. Von der Energiequelle 26, die im Normalfall aus einem oder zwei hintereinander geschalteten Akkumulatoren besteht, geht vom Minuspol 28 zumindest eine Steuermasseleitung 5 über den Stecker 29 ins Steuergerät 6. Vorzugsweise ist eine zusätzliche Leistungsmasseleitung 5a vorgesehen, die mit dem Steuergerät 6 verbunden ist. Vom Pluspol 27 der Energiequelle 26 ist wenigstens eine beim Ausschalten des Kraftfahrzeuges nicht abgeschaltete Versorgungsleitung 4 von der Energiequelle 26 mit dem Steuergerät 6 verbunden. Ferner ist eine zweite Versorgungsleitung 3 dargestellt, die durch Ausschalten bzw. Abstellen des Fahrzeugs abschaltbar ist und die mit dem Steuergerät 6 verbunden ist. Die außerhalb der Druckluftaufbereitungseinrichtung mit dem Schalter 2 schaltbare Versorgungsleitung 3 ist auch über den Stecker mit dem Steuergerät 6 verbunden.

Das Steuergerät 6 umfaßt einen Detektor 1, der ggf. unter Zuhilfenahme einer zusätzlich im Steuergerät angebrachten Meßleitung 12 das Öffnen des Schalters 2 detektiert. Ferner ist eine serielle Datenleitung 25 mit dem Steuergerät 6 verbunden. Über die serielle Datenleitung 25 erhält das Steuergerät wichtige Informationen wie beispielsweise die Motorendrehzahl und die Fahrzeuggeschwindigkeit, die zum Betrieb der Druckluftaufbereitungsanlage wichtig sind. Ferner ist es möglich, daß das Steuergerät 6 über die serielle Datenleitung 25 wichtige Informationen wie beispielsweise Drücke in den Bremskreisen an den Fahrer und an Steuergeräte leitet. Das Steuergerät 6 kann über die Leitungen 16 und 16a die Kreisschutzeinrichtung 7 elektrisch steuern. Das Steuergerät 6 kann ferner über die Druckreglersteuerleitung 13 des Druckreglermagnetventils 18, das den Druckregler 10 steuert, den Druckregler 10 ein- und ausschalten. Der Referenzdruck für die Druckreglersteuerung ist der Druck in der Kreisschutzversorgungsleitung 15. Anstelle des Drucks in der Kreisschutzversorgungsleitung kann auch ein nicht begrenzter Kreisdruck, der in einer der Kreisschutzausgangsleitungen 17 bis 17c vorherrscht, verwendet werden. Wird der Abschaltdruck des Druckreglers 10 erreicht, so fördert der Kompressor 20 die Luft nicht mehr durch die Lufttrocknerkartusche 8 in die Kreisschutzeinrichtung 7, sondern direkt zur Entlüftung 22 ins Freie. Der Druck, der in der Kreisschutzeinrichtung 7 herrscht, wird dabei durch ein Rückschlagventil zurückgehalten.

Das Regenerationsmagnetventil 19 wird über die Regenerationssteuerleitung 14 so umgeschaltet, daß die Luft für den Nachlaufregenerationsvorgang über die Leitung aus der Kreisschutzeinrichtung 7 am Rückschlagventil vorbeiströmen kann, um durch die Trocknerkartusche 8 zur Entlüftung 22 zu strömen. Die zurückströmende Luft nimmt das im Trockenmittel der Trocknerkartusche während der Förderphase aufgenommene Wasser wieder auf und trocknet somit das Trockenmittel. Auf diese Weise wird erreicht, daß das Trockenmittel während der nächsten Förderphasen wieder Wasser aus der geförderten Luft aufnehmen kann. Auf diese Art und Weise ist die Regeneration nach dem Ausschalten des Fahrzeugs möglich.

Die im Steuergerät 6 enthaltene Schalteinrichtung 1a ermöglicht ein Selbstabschalten des Steuergeräts 6 von der nicht beim Abschalten des Fahrzeugs abgeschalteten Versorgungsleitung 4, sobald die Nachlaufregeneration beendet wurde. Die Nachlaufregeneration startet hierbei nachdem der Schalter 2 geöffnet und das Fahrzeug somit abgestellt wurde. Hierdurch ist es möglich, den Stromverbrauch bei länger abgestelltem Fahrzeug zu verhindern. Die Schalteinrichtung 1a kann als Relaiskontakt oder als Halbleiterschalter ausgebildet sein. Die Detektion des Detektors 1 betreffend das Ausschalten des Fahrzeugs, kann entweder über die schaltbare Versorgungsleitung 3 geschehen oder über die Datenleitung 25.

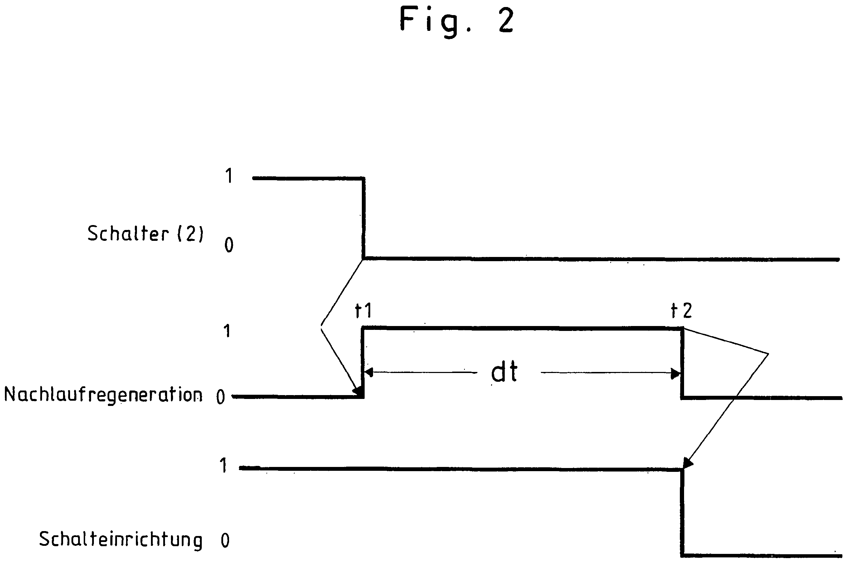

Fig. 2 zeigt schematisch den zeitlichen Ablauf einer Nachlaufgeneration, die zeitabhängig ist. Nach dem Öffnen des Schalters 2, fällt die Spannung an der Meßleitung 12 zusammen. In dem oberen Diagramm der Fig. 2 ist der Spannungsabfall dargestellt, die der Detektor 1 beim Abgreifen, wie in Fig. 1 dargestellt ist, detektiert. Diese Information wird dann dem Steuergerät zugeführt, was als Synonym für Schalter 2 geöffnet und Fahrzeug abgestellt programmiert bzw. elektronisch verknüpft dargestellt ist. Nun wird der Nachlaufregenerationsvorgang über einen Zeitraum dt, also von einer Zeit t1 bis t2 gestartet, wie in dem mittleren Diagramm der Fig. 2 dargestellt ist. In diesem Fall wird das Regenerationsmagnetventil 19 so umgeschaltet, daß der Nachlaufregenerationsvorgang eingeleitet wird. Nach Ablauf einer Zeit dt, also zum Zeitpunkt t2 schaltet die Schalteinrichtung 1a das Steuergerät 6 ab, wie in dem unteren Diagramm der Fig. 2 dargestellt ist.

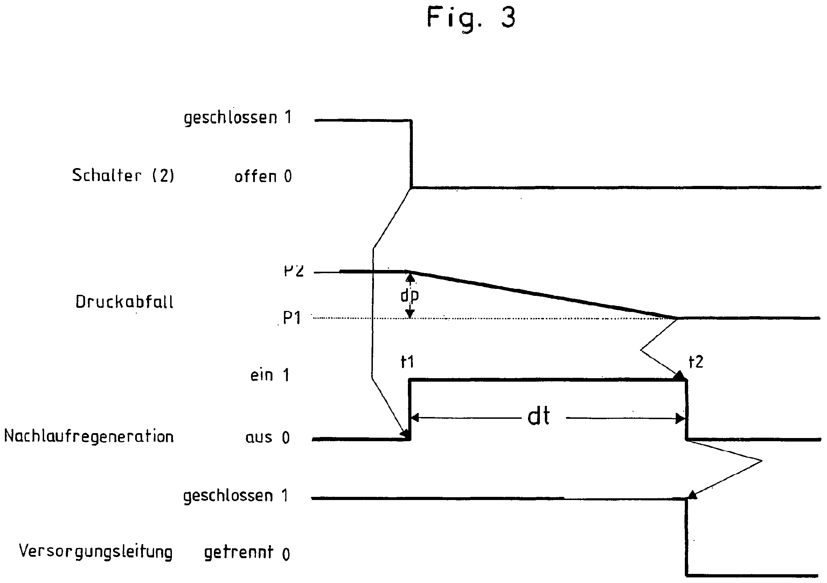

Wie in Fig. 3 dargestellt ist, das eine schematische Darstellung des Regenerationsvorganges in Abhängigkeit eines Druckabfalls darstellt, ist der Regenerationsvorgang auch druckabhängig möglich. Das oberste Diagramm der Fig. 3 entspricht dem obersten Diagramm der Fig. 2, also dem Spannungsabfall, den der Detektor 1 aufgrund des Öffnens des Schalters 2 mißt. Das zweitoberste Diagramm der Fig. 3 stellt den Druckabfall dar, der am Sensor 21 gemessen wird. Zum Zeitpunkt t1, also zum Zeitpunkt des Beginns der Nachlaufregeneration durch Bestromung des Magnetventils 19 beginnt der Druck, der in einer der Kreisschutzausgangsleitungen 17 bis 17c von dem Drucksensor 21 gemessen wird, abzufallen. Der Abfall des Drucks ist in Fig. 3 linear dargestellt. Der Druckabfall kann allerdings in einer anderen zeitabhängigen Funktion abfallen. Bei Erreichen eines Drucks P1 wird die Nachlaufregeneration beendet. Dies geschieht dadurch, daß die Bestromung des Magnetventils 19 beendet wird. Vorzugsweise geschieht dieses dadurch, daß das Steuergerät 6 abgeschaltet wird.

In einem nicht dargestellten Ausführungsbeispiel ist der Detektor 1 mit der seriellen Datenleitung 25 verbunden. Dieses hat den Vorteil, daß das elektronische Steuergerät 6 nicht direkt mit der abschaltbaren Versorgungsleitung 3 verbunden sein muß. Diese Leitung zum Steuergerät 6 kann also entfallen. An der seriellen Datenleitung 25 ist der Ausschaltvorgang des Fahrzeugs auch detektierbar. Ansonsten entspricht dieses Ausführungsbeispiel dem vorbezeichneten Ausführungsbeispiel.

### Bezugszeichenliste

- 1: Detektor
- 1a: Schaltvorrichtung
- 2: Schalter
- 3: schaltbare Versorgungsleitung
- 4: nicht abschaltbare Versorgungsleitung
- 5: Steuermasseleitung
- 5a: Leistungsmasseleitung
- 6: Steuergerät
- 7: Kreisschutzeinrichtung
- 8: Lufttrocknerkartusche
- 9: Gehäuse
- 10: Druckregler
- 11: Regenerationseinrichtung
- 12: Meßleitung
- 13: Druckreglersteuerleitung
- 14: Regenerationssteuerleitung
- 15: Kreisschutzversorgungsleitung
- 16: Steuerleitung der Kreisschutzeinrichtung
- 16a: Meßleitung der Kreisschutzeinrichtung
- 17: Kreisschutzausgangsleitung
- 17a: Kreisschutzausgangsleitung
- 17b: Kreisschutzausgangsleitung
- 17c: Kreisschutzausgangsleitung
- 18: Druckreglermagnetventil
- 19: Regenerationsmagnetventil
- 20: Kompressor
- 21: Drucksensor
- 22: Entlüftung
- 23: Rohr
- 24: Vorratsbehälter
- 25: serielle Datenleitung
- 26: Energiequelle
- 27: Pluspol
- 28: Minuspol

## Patentansprüche

1. Druckluftaufbereitungseinrichtung für Kraftfahrzeuge mit einer elektronischen Steuervorrichtung (6) und einer Regenerationseinrichtung (11), wobei mittels der elektronischen Steuervorrichtung (6) die Regenerationseinrichtung (11) und wobei mittels der elektronischen Steuervorrichtung (6) während des Betriebs eines Kraftfahrzeugs der Betrieb der Druckluftaufbereitungseinrichtung gesteuert wird, **dadurch gekennzeichnet, dass** eine Detektionseinrichtung (1) vorgesehen ist, die ein Abstellen des Kraftfahrzeuges detektiert und dass nach Abstellen des Kraftfahrzeugs mittels der Steuervorrichtung (6) die Regenerationseinrichtung (11) derart steuerbar ist, dass wenigstens ein Regenerationszyklus durchführbar ist, wobei die Stromversorgung der Steuervorrichtung (6) mittels einer beim Ausschalten des Kraftfahrzeugs nicht abschaltbaren Versorgungsleitung (4) geschieht, wobei eine Schaltvorrichtung (1 a) vorgesehen ist, mittels der die elektronische Steuervorrichtung (6) von der Stromversorgung trennbar ist, wobei die Schaltvorrichtung (1a) in der elektronischen Steuervorrichtung (6) integriert ist, und dass ein Drucksensor (21) vorgesehen ist, mittels dem eine druckabhängige Steuerung des wenigstens einen Regenerationszyklus ermöglicht ist.

2. Druckluftaufbereitungseinrichtung nach Anspruch 1, **dadurch gekennzeichnet, dass** die Schaltvorrichtung (1a) eine Zeituhr ist, mittels der das Trennen von der Spannungsversorgung nach einer vorgebbaren Zeit ermöglicht ist.

3. Druckluftaufbereitungsanlage mit Druckluftaufbereitungseinrichtung nach einem der Ansprüche 1 oder 2.

4. Kraftfahrzeug mit Druckluftversorgungsanlage nach Anspruch 3.

## Claims

1. A compressed-air processing device for motor vehicles having an electronic control unit (6) and a regeneration device (11), the regeneration device (11) being controlled by means of the electronic control unit (6) and operation of the compressed-air processing device being controlled by means of the electronic control unit (6) during operation of a motor vehicle, **characterised in that** there is provided a detection device (1) that detects when the motor vehicle is parked; that once the motor vehicle has been parked the regeneration device (11) can be controlled by means of the control unit (6) in such a manner that at least one regeneration cycle can be performed, the power supply to the control unit (6) is provided by means of a supply line (4) that cannot be shut off when the motor vehicle is switched off, there being provided a switching device (1a) by means of which the electronic control unit (6) can be disconnected from the power supply, the switching device (1a) being integrated in the electronic control unit (6); and that there is provided a pressure sensor (21) by means of which it is possible to control the at least one regeneration cycle according to pressure.

2. A compressed-air processing device according to claim 1, **characterised in that** the switching device (1a) is a time clock by means of which the voltage supply can be disconnected after a pre-definable time.

3. A compressed-air processing system having a compressed-air processing device according to one of claims 1 or 2.

4. A motor vehicle having a compressed-air processing system according to claim 3.

## Revendications

1. Dispositif de traitement d'air comprimé pour des véhicules automobiles, comprenant un système (6) électronique de commande et un dispositif (11) de régénération, dans lequel, au moyen du système (6) électronique de commande, le dispositif (11) de régénération et dans lequel, au moyen du système (6) électronique de commande, pendant le fonctionnement d'un véhicule automobile, le fonctionnement du dispositif de traitement d'air comprimé sont commandés, **caractérisé en ce qu'il** est prévu un dispositif (1) de détection, qui détecte un arrêt du véhicule, et **en ce qu'**après l'arrêt du véhicule automobile, le dispositif (11) de régénération peut, au moyen du système (6) de commande, être commandé de manière à pouvoir effectuer au moins un cycle de régénération, l'alimentation en courant électrique du système (6) de commande s'effectuant au moyen d'une ligne (4) d'alimentation qui n'est pas mise hors circuit lors de la mise hors circuit du véhicule automobile, dans lequel il est prévu un système (1a) de coupure, au moyen duquel le système (6) électronique de commande peut être séparé de l'alimentation en courant, dans lequel le système (1a) de coupure est intégré dans le système (6) électronique de commande et **en ce qu'**il est prévu un capteur (21) de pression, au moyen duquel une commande du au moins un cycle de régénération en fonction de la pression est rendue possible..

2. Dispositif de traitement d'air comprimé suivant la revendication 1, **caractérisé en ce que** le système (1a) de coupure est une minuterie, au moyen de laquelle la séparation de l'alimentation en tension est rendue possible après un temps qui peut être prescrit.

3. Installation de traitement d'air comprimé, comprenant un dispositif de traitement d'air comprimé suivant l'une des revendications 1 ou 2.

4. Véhicule ayant une installation d'alimentation en air comprimé suivant la revendication 3.
